# EUROPEAN PATENT APPLICATION

(11) **EP 1 752 842 A1**
(43) Date of publication of application: **14.02.2007**
(21) Application number: 06117746.5
(22) Date of filing: 24.07.2006
(51) Int. Cl.: G05B 9/02

(54) **Apparatus for supplying and controlling electric appliances arranged in places at risk of explosion and corresponding control device.**

(30) Priority: 29.07.2005 IT MI20051488
(71) Applicant: Engitech Engineering & Technologies s.r.l., 20145 Milano (IT)
(72) Inventor: Palombella, Claudio, 20162, MILANO (IT)
(74) Representative: Mittler, Enrico

(57) **Abstract**

An apparatus is disclosed for supplying and controlling electrical appliances (11) arranged in places at risk of explosion; the apparatus comprises a first part (1) including the electrical appliances (11) and means (12) suitable for detecting parameters in said places at risk of explosion and for emitting electrical signals in response to the detected parameters. The apparatus comprises a supply line (3) and a second part (2) arranged at a given distance (D) from the first part (1) and comprising means (20) for supplying electrical appliances (11) through said line (3). The first part (1) comprises control means (10) inserted in an explosion-proof container (30) and suitable for processing signals coming from the detecting means (12) and for comparing said signals with respective reference signals (It); the control means (10) controls the interruption of the supply of the electrical appliances (11) when at least one of the signals coming from the detecting means (12) exceeds the respective reference signal (Fig. 1).

## Description

The present invention relates to an apparatus for supplying and controlling electric appliances arranged in places at risk of explosion.

In places at risk of explosion in which electric machines are used devices are usually installed to safeguard the operating safety of persons and machines, also in compliance with European standards such as 94/9 ATEX.

Generally, signals are processed coming from the place of installation of said machines, also said signals coming from the field. Said signals comprise measurements of temperature, pressure, electric current, frequency (rpm, vibrations), etc. that are processed to obtain threshold or reference parameters to be managed.

The implementational phase of said devices is beset with difficulties due to the technical modifications of the installations of the existing apparatuses, that are more or less substantial and with high costs with respect to the cost of the appliance to be installed. Generally, said modifications are made in zones that are distant from the zone of use of the appliance, with the need for cabling as far as the appliance and a specific design for each installation.

In view of the disclosed prior art, the object of the present invention is to provide an apparatus for supplying and controlling electric appliances arranged in places at risk of explosion that is simpler than the known ones and that is easier to install.

According to present invention, this object is achieved by means of an apparatus for supplying and controlling electric appliances arranged in places at risk of explosion, said apparatus comprising a first part including said electrical appliances and means suitable for detecting parameters in said places at risk of explosion and for emitting electrical signals in response to the detected parameters, a supply line and a second part arranged at a given distance from said first part and a supply line and comprising means for supplying said electrical appliances through said line, characterised in that said first part comprises control means inserted in an explosion-proof casing and suitable for processing signals coming from said detecting means and for comparing said signals with respective reference signals, said control means commanding the interruption of the supply of said electrical appliances when at least one of the signals coming from said detecting means exceeds the respective reference signal.

Also according to the present invention it is possible to realise a control device as defined in claim 9.

Owing to the present invention it is possible to make an apparatus for supplying and controlling electric appliances arranged in places at risk of explosion comprising a device that is easy to install near appliances to be protected and is made in such a way as not to require a specific design and modifications for installation from the point of view of the interaction with possible existing equipment.

The features and advantages of the present invention will become clear from the following detailed description of a practical embodiment thereof, illustrated by way of non-limitative example in the attached drawings in which:
figure 1 is a schematic view of the apparatus for supplying and controlling electric appliances arranged in places at risk of explosion according to an embodiment of the present invention;
figure 2 is a schematic section view of the safety device of figure 1;
figure 3 is a schematic plan view of the safety device of figure 1
figure 4 is a block diagram of the safety device of figure 2;
figure 5 is a diagram of communications between numerous safety devices according to a variation of the embodiment of figure 1;
figure 6 is a schematic view of the apparatus for supplying and controlling electric appliances arranged in places at risk of explosion according to a variation of the embodiment of the present invention shown in figure 1.

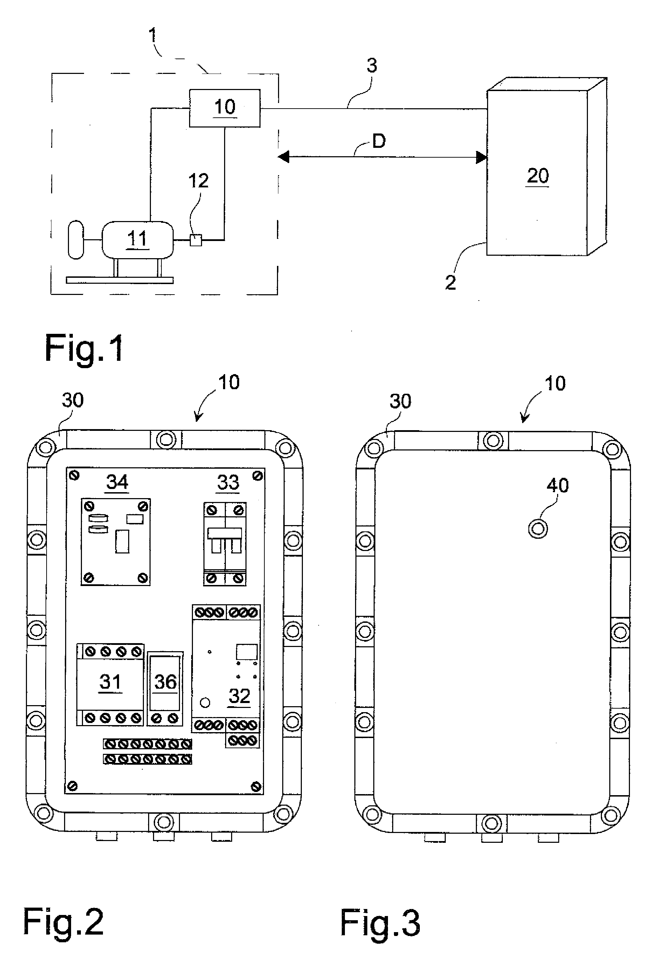

With reference to figure 1, there is shown an apparatus for supplying and controlling electric appliances arranged in places at risk of explosion according to the present invention. Said apparatus comprises a first part 1 and a second part 2 arranged at a given safety distance D, for example at least 10 metres, from said first part 1 and a supply line 3. The first part 1 is arranged in a zone at risk of explosion and comprises the electrical appliances 11 and means 12 suitable for detecting parameters in the zone at risk of explosion where the electrical appliances 11 are located and suitable for emitting electrical signals in response to the detected parameters; said parameters may be constituted by temperature, by pressure, etc. The second part 2 is arranged in a safe zone far from the zone at risk of explosion and comprises means 20 for supplying electrical appliances 11 through the supply line 3.

The apparatus conforms to CEI standards for standard applications and to CENELEC standards when required, more precisely to the standard EN 50039 (CEI 31-10) relating to electrical constructions in potentially explosive atmospheres and to standard EN 50014 (CEI 31-33) relating to electrical constructions in explosive atmospheres with the presence of gas.

The first part 1 comprises further means 10 suitable for processing signals coming from the detecting means 12 and for comparing said signals with respective reference signals It. Said further means 10 commands the interruption of the supply of the electrical appliances 11 when one of the signals coming from said detecting means 12 exceeds the respective reference signal It.

The means 10 consists of an electronic and electromechanical device connected to the supply line 3 coming from the means 20. Said device 10 is of the through type because it is inserted into the supply line 3; it is furthermore completely "invisible" from the point of view of the interaction with the plants and existing control systems and does not require tests or variations to plants and/or designs.

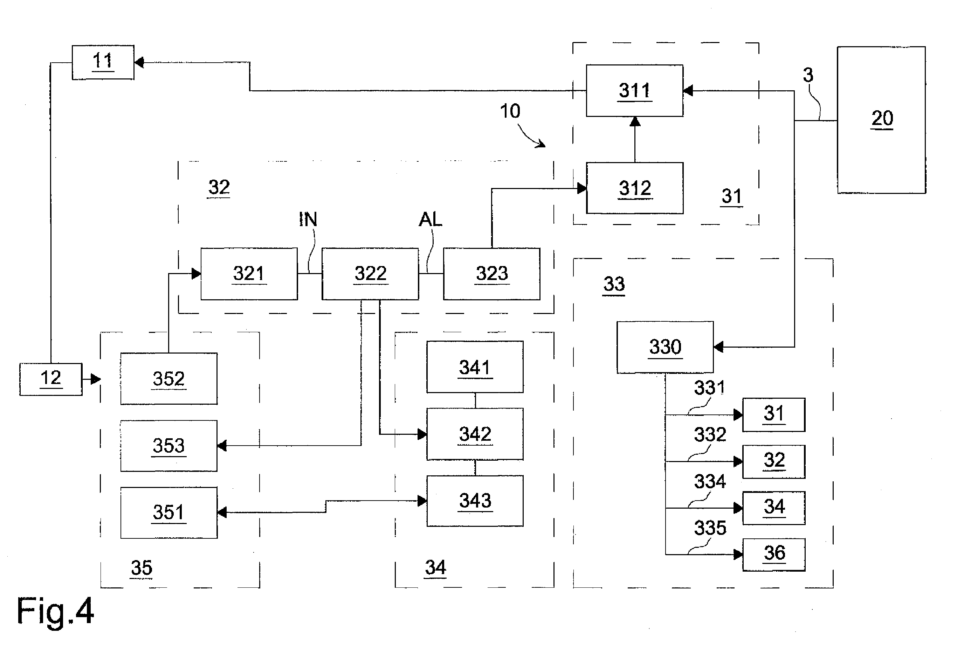

The device 10 is more visible in figures 2-4. It comprises a container 30 that is of the type and has features suitable for the intended use, i.e. is explosion-proof. Preferably for installations in defined places with an explosion hazard an Ex-certified case is used.

The container 30 comprises an input and output terminal clamp 35 of the signals comprising an element 352 for receiving the signals coming from the detecting means 12, an element 353 for the output of the signals and a communication port 351.

Inside the container 30 there is a remote control 31 suitable for interrupting the supply of the appliances 11; the remote control 31 is of the type with normally closed contacts and of a class and power suitable for supplying the appliances 11. The remote control 31 comprises a normally closed switch 311 inserted into the supply line 3 and a driving device 312 suitable for commanding the opening of the switch 311.

Inside the container 30 there is control means 32 suitable for receiving the signals coming from the sensor 12, processing said signals and commanding the opening of the remote control 31, with consequent interruption of the supply of the appliances 11, if one of said signals exceeds the respective reference signal. Said control means 32 comprises a group of functional elements.

The control means 32 comprises an intrinsic safety unit 321 as an interface with the signals coming from the means 12 associated with the appliances 11 to be protected. More precisely, the unit 321 receives the signals coming from the element 352.

The means 32 also comprises an electronic unit 322 for processing signals IN coming from the unit 321 and for configuring the alarm threshold or thresholds, i.e. the reference signals It; said unit is suitable for comparing the signals IN received from the unit 321 with the reference signals It and generating an alarm signal AL in response to said comparison, more precisely, if the value of one of the signals IN is greater than the respective reference signal It. Preferably, said unit 322 also comprises the logic for protecting access to the device 10 with a password for the operator. Preferably, the unit 322 provides output signals to the element 353 of the terminal clamp 35.

The means 32 comprises an alarms unit 323 consisting of an electronic and electromechanical circuit suitable for the logic management of the signal received from the electronic unit 322; said unit 323 is suitable for interpreting the signal AL received from the unit 322 and is suitable for commanding the remote control 31, more precisely it is suitable for commanding the driving device 312 of the remote control 31. Preferably, the unit 323 is suitable for providing an alarm signal by means of a local warning lamp 40.

If the signal A1 is generated it is necessary to reinitialise the device 10. The unit 322 can be programmed in such a way as to reset the normal conditions of use, i.e. the condition preceding the condition that led the alarm signal AL to be generated, in an automatic manner; i.e. the unit 322 sends a signal to the unit 323 to have the remote control 31 closed again.

Still inside the container 30 there are the means 33 for supplying the units that constitute the device 10. Said means 33 comprises a unit 330 that is suitable for deriving from the supply line 3 the electric signals required for the correct operation of the various units of the device 10. More precisely, the unit 330 provides a supply signal 331 of the unit 31, a supply signal 332 of the unit 32 and a signal 334 for the supply of the unit 34. Preferably, the unit 330 may provide another signal 335 for supplying auxiliary components 36.

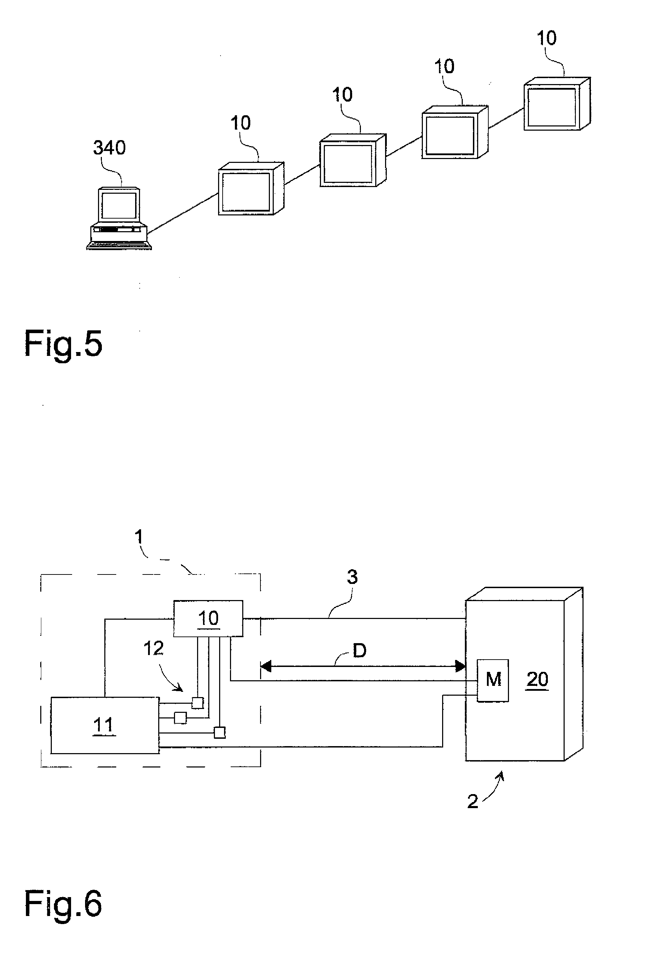

The device 10 according to a version of the embodiment of the invention may also comprise an electronic card 34 suitable for creating a network communication between several installed devices 10 and for enabling network interrogation by means of a personal computer 340, as shown in figure 5. The electronic card 34 comprises an encoding element 341, a microprocessor 342 suitable for receiving the signals coming from the unit 322 and a communication element 343 for sending the signals to the exterior by means of the communication port 351 of the input and output terminal clamp of the signals 35.

The various parts of the device 10 will be assembled and cabled on a bottom panel enclosed in the container. The device will be produced on the basis of the agreed specifications, and in function of the latter certain optional parts can be included or not, whilst keeping the operating principle unvaried. The dimensions of the container may vary in function of the power of the device to be controlled and in function of the type and classification of the area of installation. The installed electronic components may be modified in order to optimize costs and performance or for productive needs, without nevertheless altering the disclosed operating principles thereof.

According to another version of the embodiment of the invention shown in figure 6, the device 10 can be connected to a control module M inside the means 20. The control module M can receive data on the signals detected or on the condition in which the appliances 11 find themselves. By means of the module M a signal can be sent for restoring the normal condition of use, i.e. the condition preceding the condition that caused the alarm signal AL to be generated.

The supply voltage supplied by the means 20 is between 220 Volt and 400 VAC and the device 10 can manage digital or analogue input signals.

The device 10 can also be used as an alarm device; in such a case it will not be inserted into the supply line 3 of the appliances 11 but will manage only the signals coming from the detecting means 12.

## Claims

1. Apparatus for supplying and controlling electrical appliances (11) arranged in a place at risk of explosion, said apparatus comprising a first part (1) including said electrical appliances (11) and means (12) suitable for detecting parameters in said place at risk of explosion and for emitting electrical signals in response to the detected parameters, a supply line (3) and a second part (2) arranged at a given distance (D) from said first part (1) and comprising means (20) for supplying said electrical appliances (11) through said line (3), **characterised in that** said first part (1) comprises control means (10) inserted in an explosion-proof casing (30) and suitable for processing signals coming from said detecting means (12) and for comparing said signals with respective reference signals (It), said control means (10) commanding the interruption of the supply of said electrical appliances (11) when at least one of the signals coming from said detecting means (12) exceeds the respective reference signal (It).

2. Apparatus according to claim 1, **characterised in that** said control means (10) comprises a device (10) comprising a remote control (31) that is normally closed and is inserted into said supply line (3) and an element (32) for driving said remote control (31).

3. Apparatus according to claim 1, **characterised in that** said further means (10) comprises a plurality of devices (10) each comprising a remote control (31) that is normally closed and is inserted into said supply line (3) and an element (32) for driving said remote control (31), said plurality of devices (10) comprising an electronic card (34) suitable for creating a communication network between the devices of said plurality and a computer (340).

4. Apparatus according to claim 2 or 3, **characterised in that** said driving element (32) comprises a unit (322) for configuring said reference signals (It) for generating an alarm signal (AL) if the value of one of the signals coming from said detecting means (12) exceeds the respective reference signal.

5. Apparatus according to claim 4, **characterised in that** said driving element (32) comprises a further unit (323) suitable for receiving said alarm signal (AL) and for controlling the remote control (31).

6. Apparatus according to claim 5, **characterised in that** said unit (322) is suitable for automatically restoring the conditions preceding the generation of said alarm signal (AL) when the values of the signals coming from said detecting means (12) return below to the respective reference signals.

7. Apparatus according to claim 5, **characterised in that** said unit (322) contains the logic for protecting access to said further means (10) by means of a password for the operator.

8. Apparatus according to claim 1, **characterised in that** said supply means (20) comprises an element (M) suitable for receiving from said further means (10) data on the signals detected or on the condition in which the appliances (11) find themselves, said element (M) is suitable for sending a signal for restoring the condition preceding the generation of said alarm signal (AL) when the values of the signals coming from said detecting means (12) return below the respective reference signals.

9. Device for controlling electrical appliances (11) arranged in a zone at risk of explosion, said appliances (11) being supplied by means (20) arranged at a given distance (D) from said electrical appliances and there being provided means (12) suitable for detecting parameters in said place at risk of explosion and for emitting electrical signals in response to the detected parameters, **characterised in that** said device (10) is provided with an explosion-proof container (30) and is suitable for processing signals coming from the detecting means (12), said device (10) being suitable for comparing said signals with respective reference signals (It) and commanding the interruption of the supply of said electrical appliances (11) when at least one of the signals coming from said detecting means (12) exceeds the respective reference signal (It).

10. Device according to claim 9, **characterised in that** it comprises a remote control (31) normally closed and is inserted into said supply line (3) and an element (32) for driving said remote control (31).

11. Device according to claim 10, **characterised in that** said driving element (32) comprises a unit (322) for configuring said reference signals (It) and for generating an alarm signal (AL) if the value of one of the signals coming from said detecting means (12) exceeds the respective reference signal.

12. Device according to claim 11, **characterised in that** said driving element (32) comprises a further unit (323) suitable for receiving said alarm signal (AL) and for controlling the remote control (31).

13. Device according to claim 12, **characterised in that** said unit (322) is suitable for automatically restoring the condition preceding the generation of said alarm signal (AL) when the values of the signals coming from said detecting means (12) return below the respective reference signals.

14. Device according to claim 12, **characterised in that** said unit (322) contains the logic for protecting access to said further means (10) by means of a password for the operator.
